(19) **Europäisches Patentamt / European Patent Office / Office européen des brevets**

(11) **EP 1 128 666 B1**

(12) **EUROPEAN PATENT SPECIFICATION**

(45) Date of publication and mention
of the grant of the patent:
**25.04.2007 Bulletin 2007/17**

(51) Int Cl.:
*H04N 7/18* (2006.01)    *H04N 5/232* (2006.01)
*G03B 13/36* (2006.01)

(21) Application number: **01301256.2**

(22) Date of filing: **14.02.2001**

(54) **Object monitoring apparatus**

Objektüberwachungsvorrichtung

Appareil pour surveiller des objets

(84) Designated Contracting States:
**DE FR GB**

(30) Priority: **15.02.2000 JP 2000036120**

(43) Date of publication of application:
**29.08.2001 Bulletin 2001/35**

(60) Divisional application:
**04023651.5 / 1 499 130**

(73) Proprietor: **MATSUSHITA ELECTRIC INDUSTRIAL CO., LTD.**
**Kadoma-shi, Osaka 571-8501 (JP)**

(72) Inventors:
• **Miwa, Michio**
**Urayasu-shi,**
**Chiba-ken 279-0012 (JP)**
• **Sato, Makoto**
**Machida-shi,**
**Tokyo 194-0001 (JP)**

(74) Representative: **Senior, Alan Murray**
**J.A. KEMP & CO.,**
**14 South Square,**
**Gray's Inn**
**London WC1R 5JJ (GB)**

(56) References cited:
**EP-A- 0 908 846**     **US-A- 5 115 262**
**US-A- 5 208 625**     **US-A- 5 534 923**
**US-A- 5 623 708**     **US-A- 5 825 016**
**US-A- 5 930 532**

• **PETERS R A ET AL: "Centering peripheral features in an indoor environment using a binocular log-polar 4 DOF camera head" ROBOTICS AND AUTONOMOUS SYSTEMS, ELSEVIER SCIENCE PUBLISHERS, AMSTERDAM, NL, vol. 18, no. 1, 1 July 1996 (1996-07-01), pages 271-281, XP004007614 ISSN: 0921-8890**
• **DOSKOLOVICH L L ET AL: "Comparative analysis of different focusators focusing into a segment" OPTICS AND LASER TECHNOLOGY, ELSEVIER SCIENCE PUBLISHERS BV., AMSTERDAM, NL, vol. 27, no. 4, 1 August 1995 (1995-08-01), pages 207-213, XP004026208 ISSN: 0030-3992**

## Description

This invention relates to an object monitoring apparatus including a camera.

Japanese patent application publication number 11-044837 discloses an automatic focusing device for a camera. The device in Japanese application 11-044837 includes a focal point detector. An image of an object is repetitively photoelectrically converted into an object image signal composed of pixel corresponding signals. The focal point detector outputs the object image signal to a motion prediction calculator. The motion prediction calculator stores the object image signal into an internal memory.

In the device of Japanese application 11-044837, a motion deciding section divides the newest object image signal outputted from the focal point detector into blocks. The motion deciding section accesses the previous object image signal which is stored in the memory within the motion prediction calculator. The motion deciding section divides the previous object image signal into blocks. The motion deciding section evaluates the correlation between the newest object image signal and the previous object image signal on a block-by-block matching basis. The motion deciding section informs the motion prediction calculator of the evaluated correlation. The motion prediction calculator computes the length, traveled by the object in a direction along the optical axis of a camera lens, on the basis of the evaluated correlation. A defocus calculator predicts the distance between the object and a camera, which will occur a predetermined time after the present moment, in response to the computed traveled length. A sequence controller drives the camera lens in response to the predicted distance to implement automatic focusing control.

U.S. Patent No. 5,777,690 discloses a device for detecting moving objects. The device in U.S. Patent No. 5,777,690 includes an optical flow extracting unit for extracting optical flows for the respective local regions in the measured images, an focus of expansion (FOE) calculating unit for calculating an FOE of a straight line extended by the extracted optical flows, and a moving obstacle detecting unit for analyzing a temporal change of the calculated FOE to judge the presence of the moving obstacle when the temporal positional change is larger than a predetermined variation quantity.

Japanese patent application publication number 5-332725 discloses an apparatus including a lens, a diaphragm, and an imager. The diaphragm immediately follows the lens. The imager follows the diaphragm. The imager is movable relative to the lens. When the imager is in a position at which an image of an object is in focus, the size and shape of the image remains unchanged independent of a change of the diaphragm. On the other hand, when the imager is out of such an in-focus position, the size and shape of the image varies in accordance with a change of the diaphragm. In the apparatus of Japanese application 5-332725, an image signal outputted from the imager is processed while the imager is moved and the diaphragm is changed. Specifically, components of the image signal which represent edges in the image are monitored. The edge-representing signal components are used in deciding whether or not the size and shape of the image varies in accordance with the change of the diaphragm. The decision result provides detection of an in-focus position for the imager.

A. Pentland et al reported a simple real-time range camera, 1989 IEEE, pages 256-260. The Pentland's camera includes a simple imaging range sensor based on the measurement of focal error. Specifically, the error in focus is measured by comparing two geometrically identical images, one with a wide aperture, so that objects off the focal plane are blurred, with a small-aperture image where everything is sharply focused. The images are collected at the same time, so that scene motion is not a problem, and are collected along the same optical axis with the same focal length, so that there is no geometrical distortion.

There is a conceivable visual monitor apparatus which is not prior art against this invention. The conceivable visual monitor apparatus is provided with a camera which includes a photoelectric conversion device, a lens located in front of the photoelectric conversion device, and an actuator for moving the lens relative to the photoelectric conversion device. Light passes through the lens before reaching the photoelectric conversion device and forming thereon an image of a scene extending in front of the camera. The photoelectric conversion device converts the image into a corresponding video signal. The photoelectric conversion device outputs the video signal. In the conceivable visual monitor apparatus, the actuator is controlled to periodically and cyclically change the distance between the lens and the photoelectric conversion device among three different values. According to the distance change, the plane on which the camera is focused is changed among three separate positions (first, second, and third in-focus positions).

In the conceivable visual monitor apparatus, a first memory is loaded with the video signal representing an image which occurs when the first in-focus position is taken. A second memory is loaded with the video signal representing an image which occurs when the second in-focus position is taken. A third memory is loaded with the video signal representing an image which occurs when the third in-focus position is taken. The video signals in the first, second, and third memories are analyzed to find a common object contained in the images. In addition, the degree of focus for the object is calculated regarding each of the images. The calculated degrees of focus for the object are compared to decide which of the images corresponds to the best focus. The position or positional range of the object along an optical axis of the camera is determined on the basis of the in-focus position corresponding to the best-focus image.

In the conceivable visual monitor apparatus, the actuator remains periodically and cyclically driven regardless of whether an object of interest is moving or stationary. Accordingly, the conceivable visual monitor apparatus tends to consume power at a high rate.

EP 0 908 846 A discloses an image processing apparatus by which a moving object can be detected and the distance for the moving object to a predetermined position can be measured.

US 5 623 708 discloses a camera with an autofocus adjustment device which uses image plane movement velocity to detect moving objects.

It is an object of this invention to provide an improved object monitoring apparatus.

According to the present invention there is provided an object monitoring apparatus comprising:

a camera for generating - a video signal of an image of an object having
a movable lens moved under control of a controller to change an in-focus position and
first means for converting the image, represented by light passing through the lens, into the video signal;
a motion detector for detecting a moving object in an image represented by the video signal generated by the camera; and
an output unit for outputting the video signal representing an image of the moving object detected by the motion detector;

characterised by:

said controller being arranged for, when the motion detector detects a moving object, changing the in-focus position, on which the camera is focused, among predetermined positions different from each other;
a processor for detecting degrees of focus of images represented by video signals which are generated by the camera when the in-focus position coincides with the predetermined positions respectively, for deciding a greatest of the focus degrees and for controlling the output unit to output the video signal representing the image having the greatest focus degree.

The present invention will be described below with reference to exemplary embodiments and the accompanying drawings, in which:

Fig. 1 is a block diagram of a conceivable visual monitor apparatus.
Fig. 2 is a block diagram of an object monitoring apparatus according to a first embodiment of this invention.
Fig. 3 is a diagrammatic perspective view of an object and a camera in Fig. 2.
Figs. 4, 5, and 6 are diagrams of images of the object in Fig. 3 which are generated when the camera is focused on different positions, respectively.
Fig. 7 is a diagrammatic perspective view of trespassers and the camera in Fig. 2.
Fig. 8 is a block diagram of an object monitoring apparatus according to a second embodiment of this invention.
Fig. 9 is a diagram of a frame, a block, and a DCT-coefficient matrix.
Fig. 10 is a block diagram of an object monitoring apparatus according to a third embodiment of this invention.
Fig. 11 is a diagram of a DCT-coefficient matrix and a first example of a band region (a window region) set therein.
Fig. 12 is a diagram of a DCT-coefficient matrix and a second example of the band region (the window region) set therein.
Fig. 13 is a block diagram of an object monitoring apparatus according to a fourth embodiment of this invention.
Fig. 14 is a diagram of an object, a lens, and images of the object which are formed on different projection planes respectively.
Fig. 15 is a diagrammatic section view of a condenser in Fig. 13.
Fig. 16 is a diagram of an expansion-contraction member in Fig. 13.
Fig. 17 is a block diagram of a portion of an object monitoring apparatus according to a fifth embodiment of this invention.
Fig. 18 is a diagrammatic plan view of original lenses and a combination lens in Fig. 17.
Fig. 19 is a block diagram of a portion of an object monitoring apparatus according to a sixth embodiment of this invention.
Fig. 20 is a block diagram of an object monitoring apparatus according to a seventh embodiment of this invention.
Fig. 21 is a diagram of a vehicle provided with the object monitoring apparatus in Fig. 20.
Fig. 22 is a block diagram of an object monitoring apparatus according to an eighth embodiment of this invention.
Fig. 23 is a flowchart of a segment of a program for a signal processor in Fig. 22.
Fig. 24 is a block diagram of an object monitoring apparatus according to a ninth embodiment of this invention.
Fig. 25 is a flowchart of a segment of a program for a signal processor in Fig. 24.
Fig. 26 is a flowchart of a block in Fig. 25.

A conceivable visual monitor apparatus will be explained below for a better understanding of this invention.

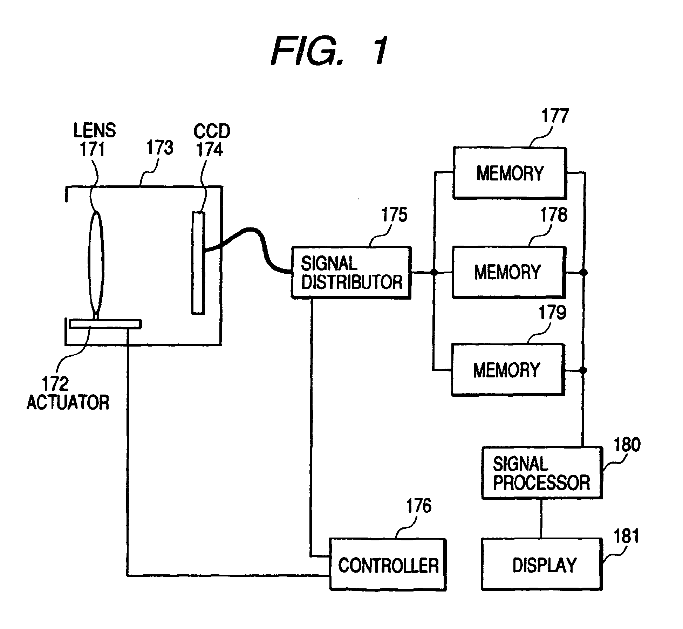

With reference to Fig. 1, a conceivable visual monitor apparatus (not prior-art against this invention) includes a camera 173. The camera 173 has a movable lens 171, an electrically-powered actuator 172, and a photoelectric conversion device 174. The lens 171 is located in front of the photoelectric conversion device 174. The actuator 172 operates to move the lens 171 relative to the photoelectric conversion device 174. Light passes through the lens 171 before reaching the photoelectric conversion device 174 and forming thereon an image of a scene extending in front of the camera 173. The photoelectric conversion device 174 converts the image into a corresponding video signal. The photoelectric conversion device 174 outputs the video signal. The photoelectric conversion device 174 is of a CCD-based type.

The conceivable apparatus of Fig. 1 further includes a signal distributor 175, a controller 176, a first memory 177, a second memory 178, a third memory 179, a signal processor 180, and a display 181. The signal distributor 175 is connected to the photoelectric conversion device 174 within the camera 173. In addition, the signal distributor 175 is connected to the controller 176 and the memories 177, 178, and 179. The controller 176 is connected to the actuator 172 within the camera 173. The signal processor 180 is connected to the memories 177, 178, and 179, and the display 181.

In the conceivable apparatus of Fig. 1, the controller 176 includes a signal generator which produces a periodical control signal. The controller 176 outputs the produced control signal to the actuator 172 within the camera 173. Also, the controller 176 outputs the control signal to the signal distributor 175. In the camera 173, the actuator 172 moves the lens 171 in response to the control signal fed from the controller 176. Specifically, the actuator 172 periodically and cyclically changes the distance between the lens 171 and the photoelectric conversion device 174 among three different values. According to the distance change, the plane on which the camera 173 is focused is changed among three separate positions (first, second, and third in-focus positions). The first, second, and third in-focus positions are equal to the farthest, intermediate, and nearest positions as seen from the camera 173, respectively. At least one complete image (a frame) is converted by the photoelectric conversion device 174 each time one of the first, second, and third in-focus positions is taken.

In the conceivable apparatus of Fig. 1, the signal distributor 175 receives the video signal from the photoelectric conversion device 174 within the camera 173. The signal distributor 175 recognizes which of the first, second, and third in-focus positions is currently taken by referring to the control signal fed from the controller 176. Thus, the signal distributor 175 recognizes which of the first, second, and third in-focus positions an image currently represented by the video signal corresponds to. The signal distributor 175 includes a memory control device which acts on the memories 177, 178, and 179 in response to the control signal fed from the controller 176. When an image currently represented by the video signal corresponds to the first in-focus position, the signal distributor 175 stores the video signal into the first memory 177. When an image currently represented by the video signal corresponds to the second in-focus position, the signal distributor 175 stores the video signal into the second memory 178. When an image currently represented by the video signal corresponds to the third in-focus position, the signal distributor 175 stores the video signal into the third memory 179.

In the conceivable apparatus of Fig. 1, the signal processor 180 operates in accordance with a program stored in its internal ROM. The program is designed to enable the signal processor 180 to implement processes mentioned later. The signal processor 180 accesses the video signals in the memories 177, 178, and 179. The signal processor 180 analyzes the video signals to find a common object contained in images represented by the video signals. The signal processor 180 calculates the degree of focus for the object regarding each of the images on a pixel-by-pixel basis. The signal processor 180 compares the calculated degrees of focus for the object, and decides which of the images corresponds to the best focus in response to the comparison results. The signal processor 180 determines the position or positional range of the object along an optical axis of the camera 173 on the basis of the in-focus position corresponding to the best-focus image.

In the conceivable apparatus of Fig. 1, the actuator 172 remains periodically and cyclically driven regardless of whether an object of interest is moving or stationary. Accordingly, the conceivable apparatus tends to consume power at a high rate.

<u>First Embodiment</u>

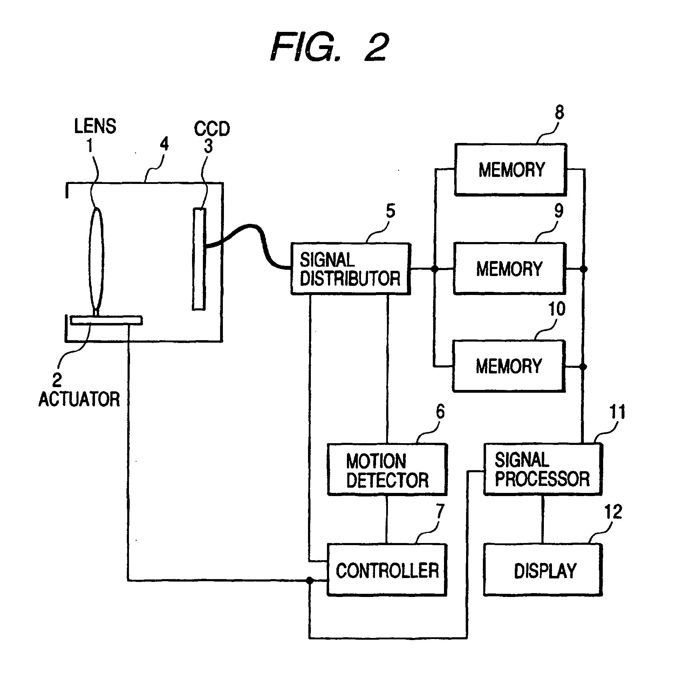

Fig. 2 shows an object monitoring apparatus according to a first embodiment of this invention. The apparatus of Fig. 2 includes a movable lens 1, an electrically-powered actuator 2, and a photoelectric conversion device 3 provided in a camera or an image capturing device 4. The lens 1 is located in front of the photoelectric conversion device 3. The actuator 2 operates to move the lens 1 relative to the photoelectric conversion device 3. Light passes through the lens 1 before reaching the photoelectric conversion device 3 and forming thereon an image of a scene extending in front of the camera 4. The photoelectric conversion device 3 converts the image into a corresponding video signal. The photoelectric conversion device 3 outputs the video signal. The photoelectric conversion device 3 implements periodical scanning so that the video signal represents a sequence of frames. The photoelectric conversion device 3 is of, for example, a CCD-based type.

The apparatus of Fig. 2 further includes a signal distributor 5, a motion detector 6, a controller 7, a first memory 8, a second memory 9, a third memory 10, a signal processor 11, and a display 12. The signal distributor 5 is connected to the photoelectric conversion device 3 within the camera 4. In addition, the signal distributor 5 is connected to the motion detector 6, the controller 7, and the memories 8, 9, and 10. The motion detector 6 is connected to the controller 7. The controller 7 is connected to the actuator 2 within the camera 4. In addition, the controller 7 is connected to the signal processor 11. The signal processor 11 is connected to the memories 8, 9, and 10, and the display 12.

The controller 7 includes a signal generator started by a trigger signal fed from the motion detector 6. The signal generator is deactivated by a turn-off signal fed from the motion detector 6. When being started, the signal generator produces a periodical active control signal. The controller 7 outputs the produced active control signal to the actuator 2 within the camera 4. Also, the controller 7 outputs the active control signal to the signal distributor 5 and the signal processor 11. When being deactivated by a turn-off signal fed from the motion detector 6, the signal generator in the controller 7 does not produce the active control signal.

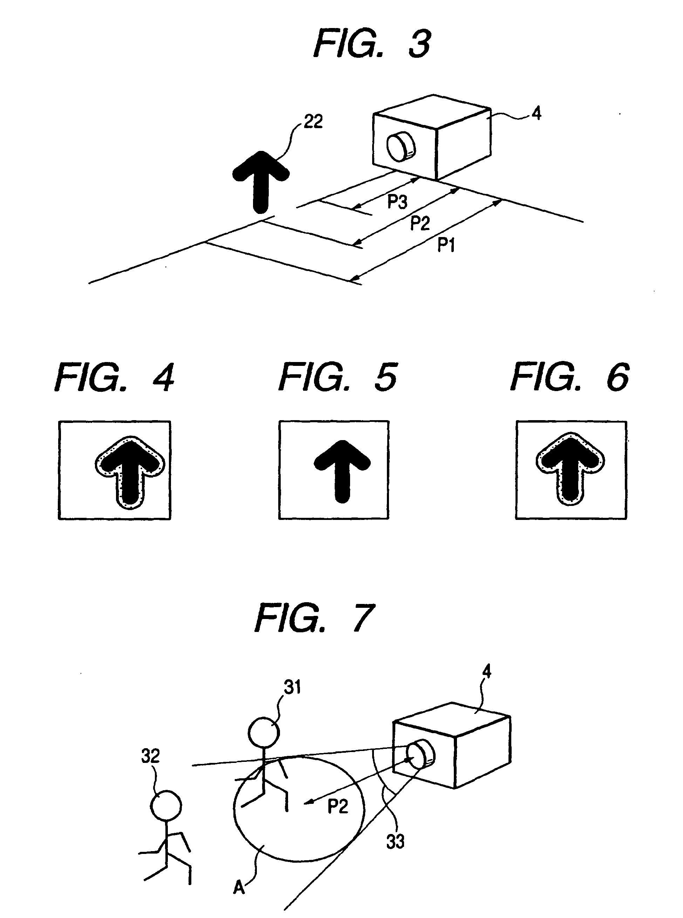

In the presence of the active control signal outputted from the controller 7, the camera 4 operates as follows. The actuator 2 moves the lens 1 in response to the active control signal. Specifically, the actuator 2 periodically and cyclically changes the distance between the lens 1 and the photoelectric conversion device 3 among three different values. According to the distance change, the plane on which the camera 4 is focused is changed among three separate positions (first, second, and third in-focus positions) P1, P2, and P3. It is shown in Fig. 3 that the first, second, and third in-focus positions P1, P2, and P3 are equal to the farthest, intermediate, and nearest positions as seen from the camera 4, respectively. At least one complete image (a frame) is converted by the photoelectric conversion device 3 each time one of the first, second, and third in-focus positions P1, P2, and P3 is taken.

One of the three different values of the distance between the lens 1 and the photoelectric conversion device 3 is specified as an initial value or a normal value. In the absence of the active control signal outputted from the controller 7, the distance between the lens 1 and the photoelectric conversion device 3 remains equal to the initial value (the normal value). Accordingly, in the absence of the active control signal, one of the first, second, and third in-focus positions P1, P2, and P3 which corresponds to the initial distance between the lens 1 and the photoelectric conversion device 3 continues to be taken. This one of the first, second, and third in-focus positions P1, P2, and P3 is also referred to as the initial in-focus position or the normal in-focus position. Preferably, the second in-focus position P2 is used as the initial in-focus position. To enable the initial in-focus position to be taken in the absence of the active control signal, the actuator 2 is provided with a returning mechanism or a self-positioning mechanism. In the case where the active control signal outputted from the controller 7 remains absent, that is, in the case where the initial in-focus position continues to be taken, the photoelectric conversion device 3 periodically converts an image formed thereon into a video signal.

The signal distributor 5 receives the video signal from the photoelectric conversion device 3 within the camera 4. The signal distributor 5 passes the video signal to the motion detector 6. The motion detector 6 operates to detect an object motion in a stream of images represented by the video signal. When the device 6 detects an object motion, the device 6 outputs a signal representative of the detected object motion to the controller 7 as a trigger signal. In the absence of a detected object motion, the motion detector 6 does not output any trigger signal to the controller 7. When a detected object motion disappears, the motion detector 6 outputs a turn-off signal to the controller 7.

For example, the signal distributor 5 includes a programmable signal processor. In this case, the signal distributor 5 operates in accordance with a program stored in its internal ROM. The program is designed to enable the signal distributor 5 to implement processes mentioned later. The signal distributor 5 recognizes which of the first, second, and third in-focus positions P1, P2, and P3 is currently taken by referring to the active control signal fed from the controller 7. Thus, the signal distributor 5 recognizes which of the first, second, and third in-focus positions P1, P2, and P3 an image currently represented by the video signal corresponds to. The signal distributor 5 includes a memory control device which acts on the memories 8, 9, and 10 in response to the active control signal fed from the controller 7. In the case where the first, second, and third in-focus positions P1, P2, and P3 are periodically and cyclically taken by turns, the signal distributor 5 operates as follows. When an image currently represented by the video signal corresponds to the first in-focus position P1, the signal distributor 5 stores the video signal into the first memory 8. When an image currently represented by the video signal corresponds to the second in-focus position P2, the signal distributor 5 stores the video signal into the second memory 9. When an image currently represented by the video signal corresponds to the third in-focus position P3, the signal distributor 5 stores the video signal into the third memory 10. On the other hand, in the case where the initial in-focus position (the second in-focus position P2) continues to be taken, the signal distributor 5 does not store the video signal into any of the memories 8, 9, and 10.

Since the first, second, and third in-focus positions P1, P2, and P3 are spaced from the camera 4 by different distances respectively, a real same-size area forms different-size regions of images represented by video signals corresponding to the first, second, and third in-focus positions P1, P2, and P3. The signal distributor 5 compensates for such image-size variation. Specifically, when an image currently represented by the video signal corresponds to the first in-focus position P1, the signal distributor 5 subjects the video signal to image-size correction to provide an equality with an image size corresponding to the second in-focus position P2. Then, the signal distributor 5 stores the correction-resultant video signal into the first memory 8. When an image currently represented by the video signal corresponds to the third in-focus position P3, the signal distributor 5 subjects the video signal to image-size correction to provide an equality with an image size corresponding to the second in-focus position P2. Then, the signal distributor 5 stores the correction-resultant video signal into the third memory 10.

For example, the signal processor 11 is of a programmable type. In this case, the signal processor 11 operates in accordance with a program stored in its internal ROM. The program is designed to enable the signal processor 11 to implement processes mentioned later. The signal processor 11 decides whether or not the active control signal is being outputted from the controller 7. In other words, the signal processor 11 decides whether or not the first, second, and third in-focus positions P1, P2, and P3 are periodically and cyclically taken by turns, and hence decides whether or not the initial in-focus position (the second in-focus position P2) continues to be taken. In the case where the first, second, and third in-focus positions P1, P2, and P3 are periodically and cyclically taken by turns, the signal processor 11 accesses the video signals in the memories 8, 9, and 10. The signal processor 11 analyzes the video signals to find a common object contained in images represented by the video signals. The signal processor 11 calculates the degree of focus for the object regarding each of the images on a pixel-by-pixel basis. The signal processor 11 compares the calculated degrees of focus for the object, and decides which of the images corresponds to the best focus in response to the comparison results. The signal processor 11 transfers the video signal representative of the best-focus image from the related memory (the memory 8, 9, or 10) to the display 12. The signal processor 11 controls the display 12 to indicate the best-focus image represented by the transferred video signal. On the other hand, in the case where the initial in-focus position (the second in-focus position P2) continues to be taken, the signal processor 11 does not access any of the memories 8, 9, and 10.

With reference to Fig. 3, a moving object 22 has just reached the second in-focus position P2. In this case, as shown in Fig. 5, a frame represented by the video signal corresponding to the second in-focus position P2 contains an image of the object 22 which is in focus. On the other hand, as shown in Fig. 4, a frame represented by the video signal corresponding to the first in-focus position P2 contains a fuzzy image of the object 22. Similarly, as shown in Fig. 6, a frame represented by the video signal corresponding to the third in-focus position P3 contains a fuzzy image of the object 22.

With reference to Fig. 7, trespassers 31 and 32 come into the field 33 of view of the camera 4. When the motion detector 6 detects motion of at least one of the trespassers 31 and 32, the device 6 outputs a trigger signal to the controller 7. The controller 7 generates an active control signal in response to the trigger signal, and outputs the generated active control signal to the actuator 2, the signal distributor 5, and the signal processor 11. As a result, the camera 4 is operated in the mode where the first, second, and third in-focus positions P1, P2, and P3 are periodically and cyclically taken by turns. In addition, the device 5 distributes a video signal to the memories 8, 9, and 10. Furthermore, the signal processor 11 implements the previously-mentioned signal processing. Thus, the signal processor 11 selects and decides the best-focus image from among three images corresponding to the first, second, and third in-focus positions P1, P2, and P3. The signal processor 11 transfers the video signal representative of the best-focus image from the related memory (the memory 8, 9, or 10) to the display 12. The signal processor 11 controls the display 12 to indicate the best-focus image represented by the transferred video signal. As a result, an image of the trespasser of interest is indicated on the display 12.

The position of the trespasser of interest may be estimated in response to which of the first, second, and third in-focus positions P1, P2, and P3 the best-focus image corresponds to. In this case, it is preferable that only when the trespasser of interest (the trespasser 31 in Fig. 7) enters a specified area "A" centered at the second in-focus position P2, the signal processor 11 transfers the video signal representative of the best-focus image from the related memory (the memory 8, 9, or 10) to the display 12. Thus, only when the trespasser of interest enters the specified area "A", an image thereof is indicated on the display 12.

Second Embodiment

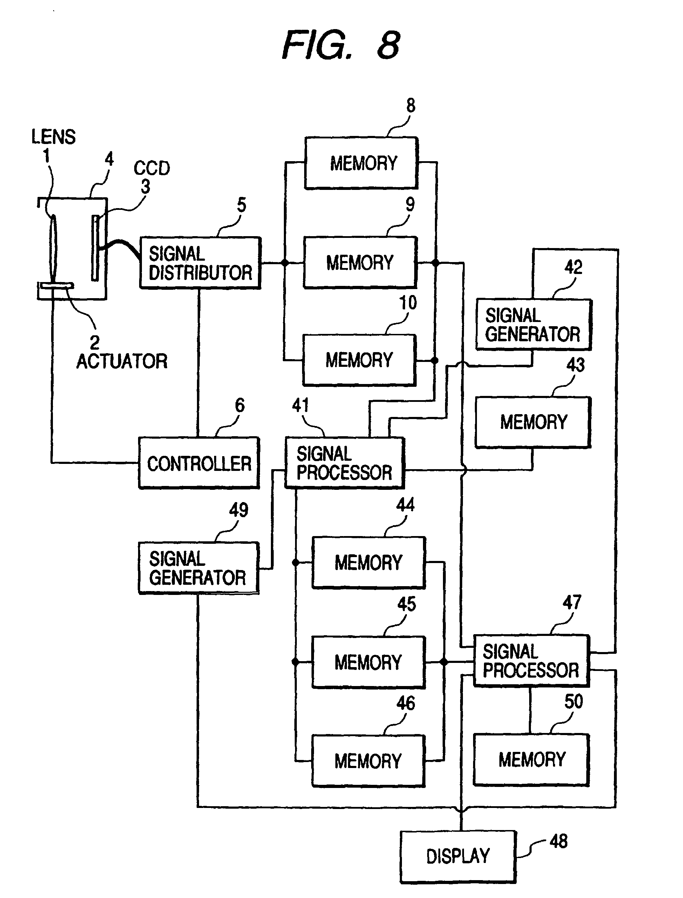

Fig. 8 shows an object monitoring apparatus according to a second embodiment of this invention. The apparatus of Fig. 8 is similar to the apparatus of Fig. 2 except for design changes mentioned later.

The apparatus of Fig. 8 includes a signal processor 41, a signal generator 42, memories 43, 44, 45, and 46, a signal processor 47, a display 48, a signal generator 49, and a memory 50. The signal processor 41 is connected to the memories 8, 9, and 10. In addition, the signal processor 41 is connected to the signal generator 42, the memories 43, 44, 45, and 46, and the signal generator 49. The signal generator 42 is connected to the signal processor 47. The signal processor 47 is connected to the memories 8, 9, and 10. In addition, the signal processor 47 is connected to the memories 43, 44, 45, 46, and 50, the display 48, and the signal generator 49.

In the apparatus of Fig. 8, it is preferable that the controller 6 is continuously active. Thus, the camera 4 continues to be operated in the mode where the first, second, and third in-focus positions P1, P2, and P3 are periodically and cyclically taken by turns. The signal distributor 5 loads the memory 8 with a video signal corresponding to the first in-focus position P1. The signal distributor 5 loads the memory 9 with a video signal corresponding to the second in-focus position P2. The signal distributor 5 loads the memory 10 with a video signal corresponding to the third in-focus position P3.

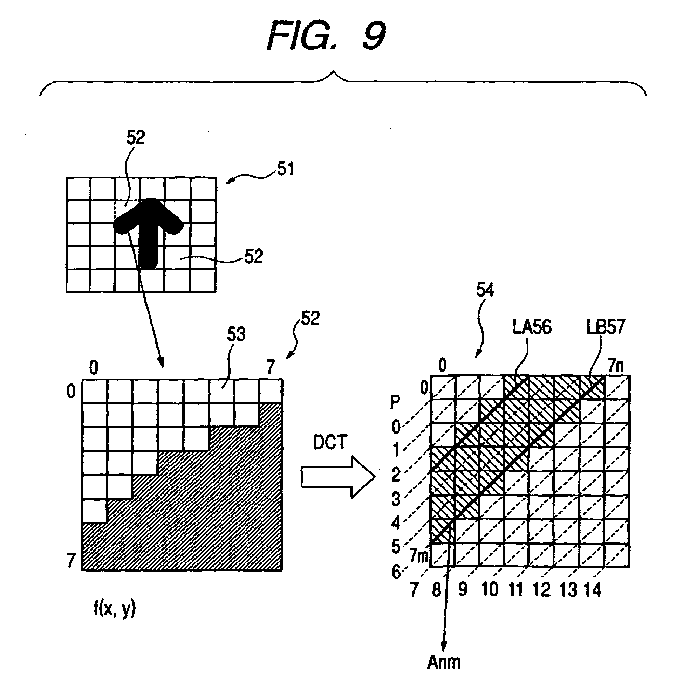

As shown in Fig. 9, a frame 51 represented by each of the video signals in the memories 8, 9, and 10 is divided into a plurality of blocks 52 each having 8 by 8 pixels. The signal generator 49 includes a clock signal generator, and a counter responsive to the output signal of the clock signal generator. The counter generates a block address signal periodically updated. The block address signal designates one from among the blocks composing one frame. The designated block is periodically changed from one to another so that all the blocks composing one frame are sequentially scanned. The signal generator 49 outputs the block address signal to the signal processors 41 and 47.

For example, the signal processor 41 is of a programmable type. In this case, the signal processor 41 operates in accordance with a program stored in its internal ROM. The program is designed to enable the signal processor 41 to implement processes mentioned later. The signal processor 41 uses the memory 43 to implement the processes. For example, the signal processor 47 is of a programmable type. In this case, the signal processor 47 operates in accordance with a program stored in its internal ROM. The program is designed to enable the signal processor 47 to implement processes mentioned later.

The signal processor 41 reads out a portion of the video signal from the memory 8 in response to the block address signal. Specifically, the read-out video signal portion corresponds to the block designated by the block address signal. The signal processor 41 subjects the block-corresponding video signal portion to DCT (discrete cosine transform) according to the following equations.

$$A_{nm} = \frac{1}{4} C_n C_m \sum_{x=0}^{7} \sum_{y=0}^{7} f(x,y) \cos\frac{(2x+1)n\pi}{16} \cos\frac{(2y+1)m\pi}{16} \qquad \cdots (58)$$

$$C_n C_m = \frac{1}{\sqrt{2}} \qquad \text{for } n, m = 0 \qquad \cdots (59A)$$

$$C_n C_m = 1 \qquad \text{otherwise} \qquad \cdots (59B)$$

where f(x,y) denotes the block-corresponding video signal portion on a pixel-by-pixel basis. The DCT provides 64 DCT coefficients Anm which are arranged in a 8-by-8 matrix 54 as shown in Fig. 9. In the matrix 54, a DCT coefficient located at the uppermost and leftmost position corresponds to a DC signal component. A DCT coefficient at a position closer to the lowermost and rightmost position corresponds to a higher-frequency AC signal component. A variable and shiftable window region (a variable and shiftable band region) corresponding to a movable frequency band is set in the matrix. This process corresponds to operation of the signal generator 42. In Fig. 9, the window region (the band region) is illustrated as the dotted area in the matrix 54. Specifically, two parallel slant lines LA56 and LB57 are set in the matrix 54. DCT coefficients at positions on the lines LA56 and LB57, and DCT coefficients at positions between the lines LA56 and LB57 compose the band region (the window region). The lines LA56 and LB57 are selected from among 14 parallel slant lines illustrated as broken lines in the matrix 54 in Fig. 9. To vary and shift the band region, the selected lines LA56 and LB57 are changed. Accordingly, the width of the band region is variable while the central position thereof is shiftable. The signal processor 41 receives a signal from the signal generator 42 which indicates a current band region. The signal processor 41 summates the squares of DCT coefficients at positions in the current band region according to the following equation.

$$S = \Sigma (A_{nm})^2 \qquad \cdots (60)$$

The signal processor 41 uses "S1" as an indication of the summation result. The signal processor 41 stores data representative of the summation result S1 into the memory 44.

The signal processor 41 implements signal processing for the video signal in the memory 9 and the video signal in the memory 10 similar to the above-mentioned processing for the video signal in the memory 8. Regarding the video signal in the memory 9, the signal processor 41 stores data representative of a summation result S2 into the memory 45. Regarding the video signal in the memory 10, the signal processor 41 stores data representative of a summation result S3 into the memory 46.

The signal processor 47 reads out the data representative of the summation results S1, S2, and S3 from the memories 44, 45, and 46. The signal processor 47 calculates the variance T of the summation results S1, S2, and S3 according to the following equation.

$$T = \frac{1}{3} \sum_{k=1}^{3} (Sk - S0)^2 \qquad \cdots (61)$$

where S0 denotes a mean of the summation results S1, S2, and S3. The signal processor 47 stores data representative of the calculated variance T into the memory 50. The signal processor 47 is informed of the current band region by the signal generator 42. The signal processor 47 stores data representative of the current band region into the memory 50. The signal processor 47 may store data representative of the current band region into the memory 43. Then, the signal processor 47 outputs a change requirement signal to the signal generator 42.

The signal generator 42 updates its output signal in response to the change requirement signal, thereby varying or shifting the band region to set a new band region. The signal processors 41 and 47 repeat the previously-mentioned signal processing for the new band region (the current band region). The signal processor 47 calculates a new variance T(new). The signal processor 47 reads out the data representative of the previous variance T(old) from the memory 50. The signal processor 47 compares the new variance T(new) and the previous variance T(old) with each other. When the new variance T(new) is greater than the previous variance T(old), the signal processor 47 replaces the data of the previous variance T(old) in the memory 50 with data of the new variance T(new) to update the variance data in the memory 50. In addition, the signal processor 47 replaces the data of the previous band region in the memory 50 with data of the new band region (the current band region) to update the band region data in the memory 50. In the case where the band region data are stored in the memory 43, the signal processor 47 replaces the data of the previous band region in the memory 43 with data of the new band region (the current band region) to update the band region data in the memory 43. On the other hand, when the new variance T(new) is equal to or smaller than the previous variance T(old), the signal processor 47 does not update the variance data in the memory 50 and the band region data in the memory 50 (or the memory 43). Thus, in this case, the data of the previous variance and the data of the previous band region remain in the memory 50 (or the memories 43 and 50) as they are. Then, the signal processor 47 outputs a change requirement signal to the signal generator 42.

The signal processors 41 and 47 iterate the previously-mentioned signal processing while the band region (the window region) represented by the output signal of the signal generator 42 is shifted and varied. When the selected band region has been changed among all the possible band regions, data of the greatest variance are present in the memory 50 and also data of the band region corresponding to the greatest variance are present in the memory 50 (or the memory 43). The signal processor 41 accesses the memory 50 (or the memory 43), and gets the information of the greatest-variance band region. The signal processor 41 obtains the summation results S1, S2, and S3 for the greatest-variance band region. The signal processor 41 stores the data of the summation result S1, the data of the summation result S2, and the data of the summation result S3 into the memories 44, 45, and 46, respectively. The signal processor 47 reads out the data of the summation results S1, S2, and S3 from the memories 44, 45, and 46. The signal processor 47 compares the summation results S1, S2, and S3 to find the greatest of the summation results S1, S2, and S3. When the summation result S1 is the greatest, the signal processor 47 reads out a portion of the video signal from the memory 8 in response to the block address signal. When the summation result S2 is the greatest, the signal processor 47 reads out a portion of the video signal from the memory 9 in response to the block address signal. When the summation result S3 is the greatest, the signal processor 47 reads out a portion of the video signal from the memory 10 in response to the block address signal. Specifically, the read-out video signal portion corresponds to the block designated by the block address signal. The signal processor 47 stores the read-out video signal portion into a memory within the display 48. In this way, one of the video signal portion in the memory 8, the video signal portion in the memory 9, and the video signal portion in the memory 10 which corresponds to the designated block and the greatest of the summation results S1, S2, and S3 is selected before being transferred to the memory within the display 48.

Subsequently, the signal generator 49 updates the block address signal to change the designated block to next one. The signal processors 41 and 47 iterate the previously-mentioned signal processing while the designated block is periodically changed from one to another. When all the blocks composing one frame have been scanned, the memory within the display 48 is loaded with a complete set of block-corresponding video signal portions which corresponds to one frame. The display 48 indicates an image represented by the complete set of the block-corresponding video signal portions.

In general, DCT coefficients corresponding to higher frequencies are greater as the degree of focus for an object in an image represented by the related video signal increases. Accordingly, the summation result S1 indicates the degree of focus for an object in a partial image represented by the related block-corresponding video signal portion in the memory 8. Similarly, the summation result S2 indicates the degree of focus for an object in a partial image represented by the related block-corresponding video signal portion in the memory 9. In addition, the summation result S3 indicates the degree of focus for an object in a partial image represented by the related block-corresponding video signal portion in the memory 10. The greatest of the summation results S1, S2, and S3 corresponds to the best focus. Accordingly, for each of the blocks composing one frame, the best-focus video signal portion is selected from among the block-corresponding signal portions in the memories 8, 9, and 10, and is then transferred to the memory within the display 48. As a result, the best-focus image is indicated by the display 48. In the DCT-coefficient matrix, the band region at which the variance T peaks is suited for accurate evaluation of the degrees of focus on the basis of the summation results S1, S2, and S3.

Third Embodiment

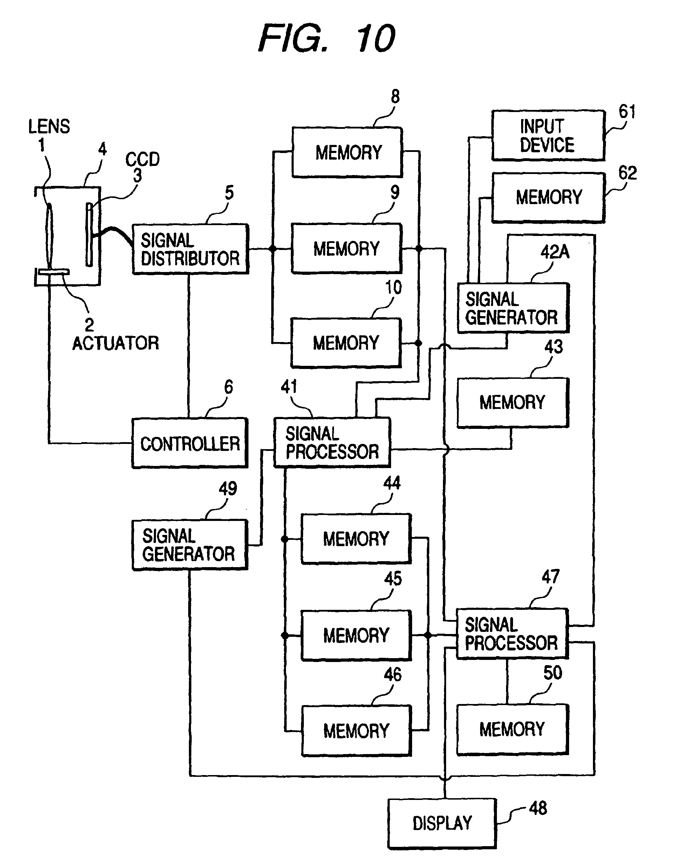

Fig. 10 shows an object monitoring apparatus according to a third embodiment of this invention. The apparatus of Fig. 10 is similar to the apparatus of Fig. 8 except for design changes mentioned later.

The apparatus of Fig. 10 includes a signal generator 42A instead of the signal generator 42 (see Fig. 8). The apparatus of Fig. 10 includes an input device 61 and a memory 62 connected to the signal generator 42A.

The memory 62 stores data representing a plurality of different patterns of a window region (a band region). The input device 61 can be operated by a user. The input device 61 outputs a pattern selection signal to the signal generator 42A when being operated by the user. The signal generator 42A reads out a data piece from the memory 62 which represents a pattern designated by the pattern selection signal. Thus, the signal generator 42A selects one from among the different patterns in accordance with the pattern selection signal. The signal generator 42A sets a current window region (a current band region) of the selected pattern. The signal generator 42A produces a signal representative of the current window region (the current band region). The signal generator 42A outputs the window region signal to the signal processors 41 and 47. The signal generator 42A updates its output signal in response to a change requirement signal fed from the signal processor 47, thereby shifting or varying the window region to set a new window region.

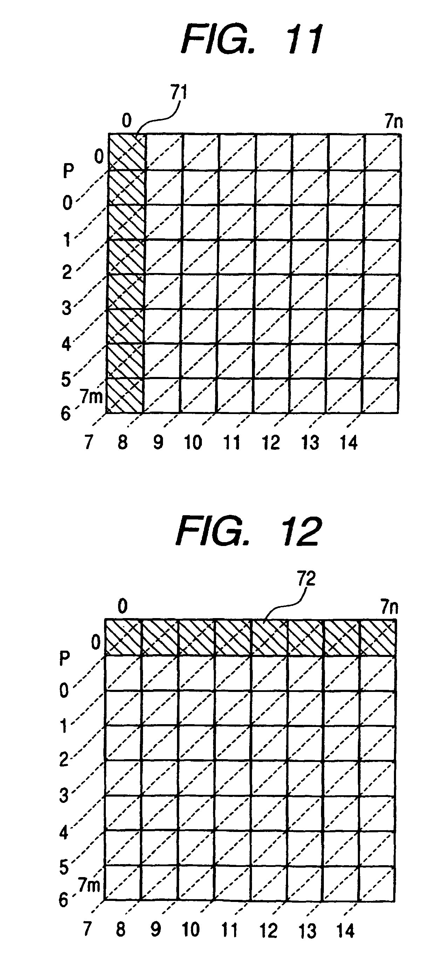

Fig. 11 shows a first example of the pattern of the window region (the band region) 71 given by the signal generator 42A. The pattern in Fig. 11 conforms with a vertical line or a column in a DCT-coefficient matrix. In this case, the window region 71 is shifted from the leftmost column to the rightmost column during the scanning of the DCT-coefficient matrix. The pattern in Fig. 11 is suited for objects optically changeable to a great degree in a vertical direction, for example, objects having horizontal stripes. When the user is interested in such objects, the user operates the input device 61 to select the pattern in Fig. 11.

Fig. 12 shows a second example of the pattern of the window region (the band region) 72 given by the signal generator 42A. The pattern in Fig. 12 conforms with a horizontal line or a row in a DCT-coefficient matrix. In this case, the window region 72 is shifted from the uppermost row to the lowermost row during the scanning of the DCT-coefficient matrix. The pattern in Fig. 12 is suited for objects optically changeable to a great degree in a horizontal direction, for example, objects having vertical stripes. When the user is interested in such objects, the user operates the input device 61 to select the pattern in Fig. 12.

Fourth Embodiment

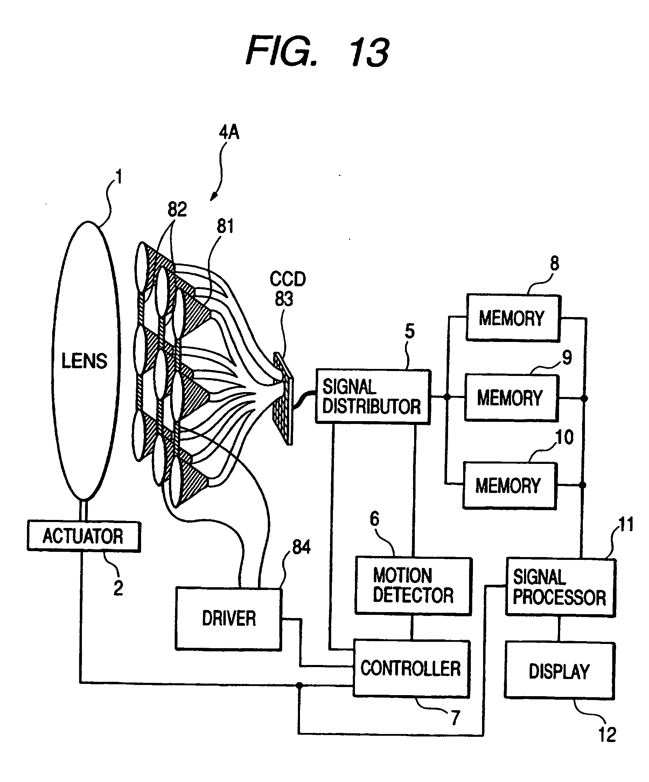

Fig. 13 shows an object monitoring apparatus according to a fourth embodiment of this invention. The apparatus of Fig. 13 is similar to the apparatus of Fig. 2 except for design changes mentioned later.

The apparatus of Fig. 13 includes a camera 4A instead of the camera 4 (see Fig. 2). The camera 4A has condensers 81, expansion-contraction members 82, and a CCD-based photoelectric conversion device 83. The condensers 81 are arranged in a lattice or a matrix. The condensers 81 are connected by the expansion-contraction members 82. The apparatus of Fig. 13 includes a driver 84 for the expansion-contraction members 82. The driver 84 is connected to the controller 7.

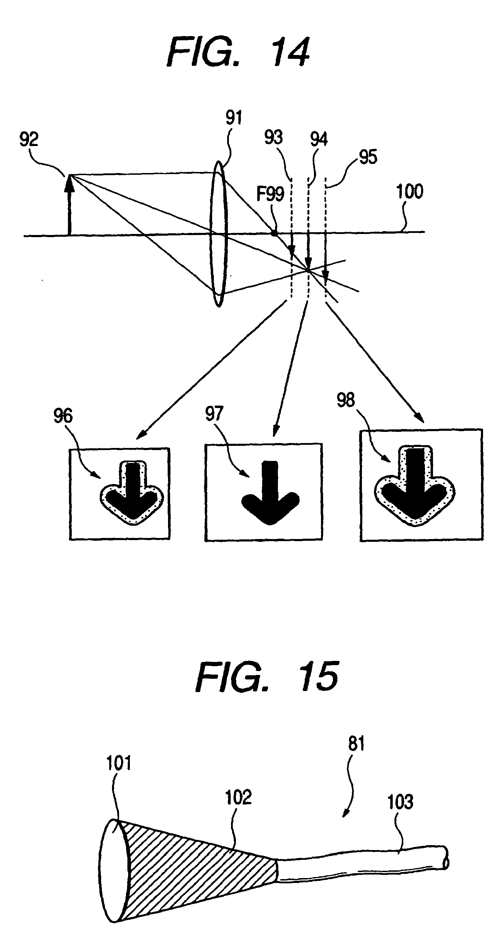

With reference to Fig. 14, a lens 91 is separate from an object 92. The lens 91 has a focal point F99 extending on the optical axis 100 thereof. Three different projection planes 93, 94, and 95 are considered which extend rearward of the focal point F99, and which are arranged in that order. First light coming from the object 92 and being parallel with the optical axis 100 travels through the lens 91 before passing through the focal point F99. Second light coming from object 92 toward the center of the lens 91 travels straight. An image of the object 92 is formed at a position where the first light and the second light intersect. In Fig. 14, the intersection position coincides with the projection plane 94. Accordingly, at the projection plane 94, an image 97 of the object 92 is in focus. On the other hand, at the projection planes 93 and 95 extending frontward and rearward of the projection plane 94, images 96 and 98 of the object 92 are fuzzy while being centered at the intersections between the projection planes 93 and 95 and the straight line passing through the object 92 and the center of the lens 91. At such a projection plane closer to the focal point F99, a smaller image of the object 92 is formed thereon. Therefore, the image size varies in accordance with which of the projection planes 93, 94, and 95 is taken. Thus, the image size varies in accordance with which of the first, second, and third in-focus positions P1, P2, and P3 is taken. The apparatus of Fig. 13 features a structure compensating for the image size variation. The compensation structure will be described below.

As shown in Fig. 15, the condenser 81 includes a lens 101, a prism 102, and an optical finer cable 103. Light condensed by the lens 101 is transmitted to the optical fiber cable 103 by the prism 102. The light is propagated along the optical fiber cable 103 before reaching a corresponding segment, for example, a corresponding pixel segment, of the photoelectric conversion device 83 (see Fig. 13).

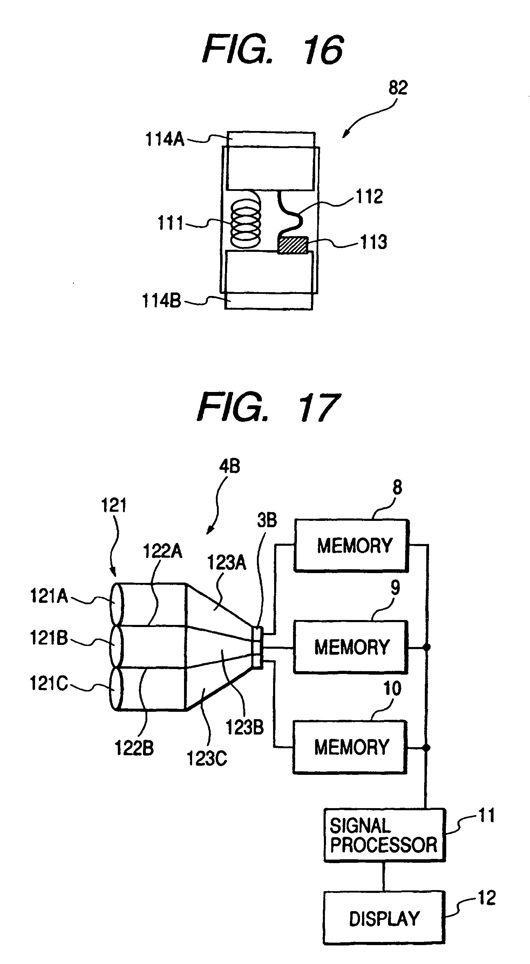

As shown in Fig. 16, the expansion-contraction member 82 includes a spring 111, a shape memory alloy member 112, a heater 113, and connectors 114A and 114B. The connectors 114A and 114B are coupled with adjacent condensers 81 respectively. The spring 111 and the shape memory alloy member 112 are provided between the connectors 114A and 114B. The heater 113 is associated with the shape memory alloy member 112. The heater 113 is electrically connected to the driver 84 (see Fig. 13). The spring 111 urges the connectors 114A and 114B in the direction toward each other. The shape memory alloy member 112 forces the connectors 114A and 114B in the direction away from each other when being heated by the heater 113.

With reference back to Fig. 13, the driver 84 receives an active control signal from the controller 7. The driver 84 recognizes which of the first, second, and third in-focus positions P1, P2, and P3 is currently taken by referring to the active control signal. The driver 84 controls the heaters 113 within the expansion-contraction members 82 in response to the active control signal fed from the controller 7, that is, in response to which of the first, second, and third in-focus positions P1, P2, and P3 is currently taken. As the heaters 113 within the expansion-contraction members 82 are activated or deactivated by the driver 84, the distances between the condensers 81 change and hence the effective size of an image formed on the photoelectric conversion device 83 varies. The control of the heaters 113 by the driver 84 is designed to compensate for the previously-mentioned image-size variation which would be caused by change among the first, second, and third in-focus positions P1, P2, and P3.

In the apparatus of Fig. 13, it is unnecessary for the signal distributor 5 to execute compensation for the image-size variation.

Fifth Embodiment

Fig. 17 shows a portion of an object monitoring apparatus according to a fifth embodiment of this invention. The apparatus of Fig. 17 is similar to the apparatus of Fig. 2 or Fig. 8 except for design changes mentioned later.

The apparatus of Fig. 17 includes a camera 4B instead of the camera 4 (see Fig. 2 or Fig. 8). The camera 4B has a combination lens 121, partition walls 122A and 122B, condensers 123A, 123B, and 123C, and a photoelectric conversion device 3B.

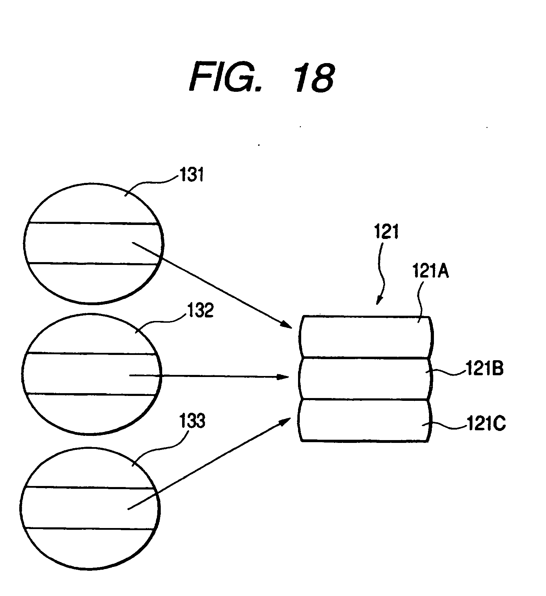

The combination lens 121 is composed of segments 121A, 121B, and 121C. As shown in Fig. 18, there are original lenses 131, 132, and 133 having different focal lengths respectively. Central portions of the original lenses 131, 132, and 133 are cut out. The central portions of the original lenses 131, 132, and 133 are combined into the combination lens 121. Specifically, the segments 121A, 121B, and 12C of the combination lens 121 are formed by the central portions of the original lenses 131, 132, and 133 respectively.

The partition walls 122A and 122B separate optical paths from each other which extend between the combination lens 121 and the condensers 123A, 123B, and 123C. The condensers 123A, 123B, and 123C are optically coupled with first, second, and third segments of the photoelectric conversion device 3B, respectively. The first, second, and third segments of the photoelectric conversion device 3B are connected to the first, second, and third memories 8, 9, and 10 respectively.

Light passing through the segment 121A of the combination lens 121 enters the condenser 123A, and then reaches the first segment of the photoelectric conversion device 3B and forms an image thereon. The first segment of the photoelectric conversion device 3B converts the image into a corresponding video signal, which is stored into the memory 8.

Light passing through the segment 121B of the combination lens 121 enters the condenser 123B, and then reaches the second segment of the photoelectric conversion device 3B and forms an image thereon. The second segment of the photoelectric conversion device 3B converts the image into a corresponding video signal, which is stored into the memory 9.

Light passing through the segment 121C of the combination lens 121 enters the condenser 123C, and then reaches the third segment of the photoelectric conversion device 3B and forms an image thereon. The third segment of the photoelectric conversion device 3B converts the image into a corresponding video signal, which is stored into the memory 10.

It is unnecessary for the apparatus of Fig. 17 to periodically and cyclically change the lens position.

Sixth Embodiment

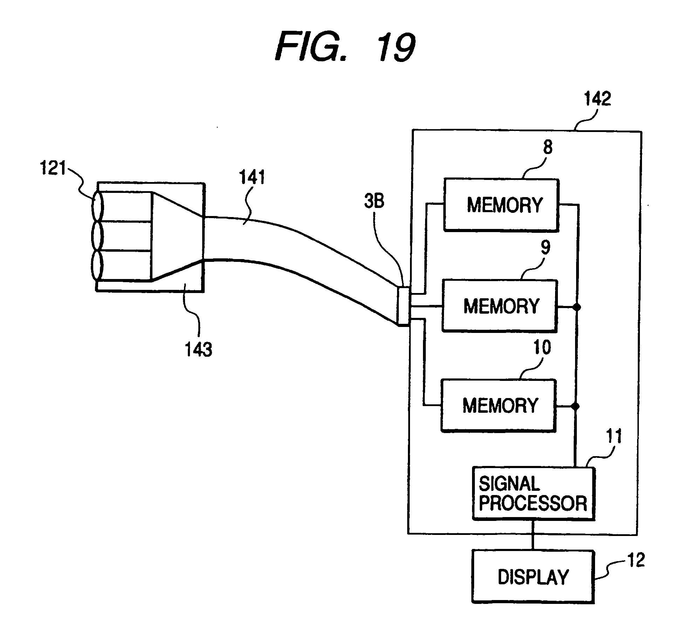

Fig. 19 shows a portion of an object monitoring apparatus according to a sixth embodiment of this invention. The apparatus of Fig. 19 is similar to the apparatus of Fig. 17 except for design changes mentioned later.

The apparatus of Fig. 19 includes a light receiving unit 143 in which the combination lens 121 is provided. The light receiving unit 143 also contains the partition walls 122A and 122B, and the condensers 123A, 123B, and 123C (see Fig. 17). An optical fiber cable 141 connects the light receiving unit 143 and a detection unit 142. Specifically, the output ends of the condensers in the light receiving unit 143 are optically coupled with inlet ends of the optical fiber cable 141. Outlet ends of the optical fiber cable 141 are optically coupled with the photoelectric conversion device 3B which is provided on the detection unit 142. The first, second, and third segments of the photoelectric conversion device 3B are connected to the first, second, and third memories 8, 9, and 10 provided in the detection unit 142, respectively.

Since the detection unit 142 and the light receiving unit 143 are connected by the optical fiber cable 141, it is possible to locate the units 142 and 143 at positions remarkably distant from each other.

Seventh Embodiment

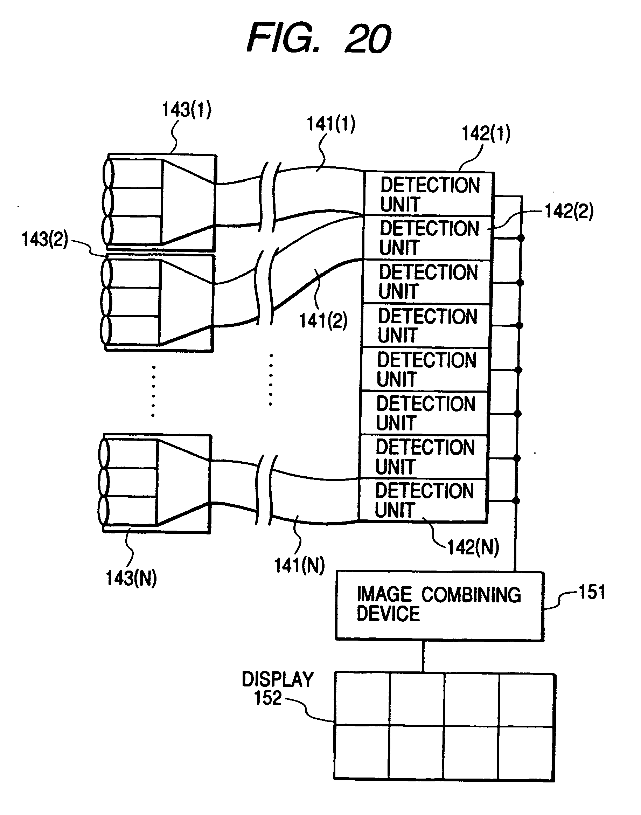

Fig. 20 shows an object monitoring apparatus according to a seventh embodiment of this invention. The apparatus of Fig. 20 is similar to the apparatus of Fig. 19 except for design changes mentioned later.

The apparatus of Fig. 20 includes a plurality of optical fiber cables 141(1), 141(2), ..., and 141(N), a plurality of detection units 142(1), 142(2), ..., and 142(N), and a plurality of light receiving units 143(1), 143(2), ..., and 143(N), where "N" denotes a predetermined natural number, for example, 8. The detection units 142(1), 142(2),..., and 142(N) are connected to the light receiving units 143(1), 143(2), ..., and 143(N) by the optical fiber cables 141(1), 141(2), ..., and 141(N), respectively.

Video signals outputted from the detection units 142(1), 142(2), ···, and 142(N) are combined into a multiple-image video signal by an image combining device 151. The multiple-image video signal is indicated by a multiple-image display 152.

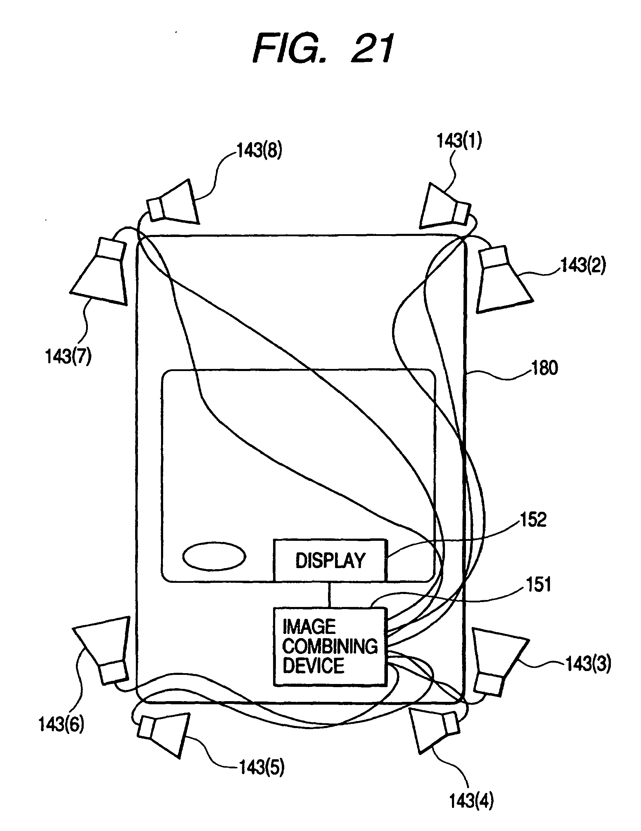

As shown in Fig. 21, the light receiving units 143(1), 143(2), ···, and 143(N) are mounted on a vehicle 180 so as to monitor the surroundings of the vehicle 180, that is, the surroundings of a rectangle defined by the body of the vehicle 180. The image combining device 151 and the multiple-image display 152 are placed in the vehicle 180.

Eighth Embodiment

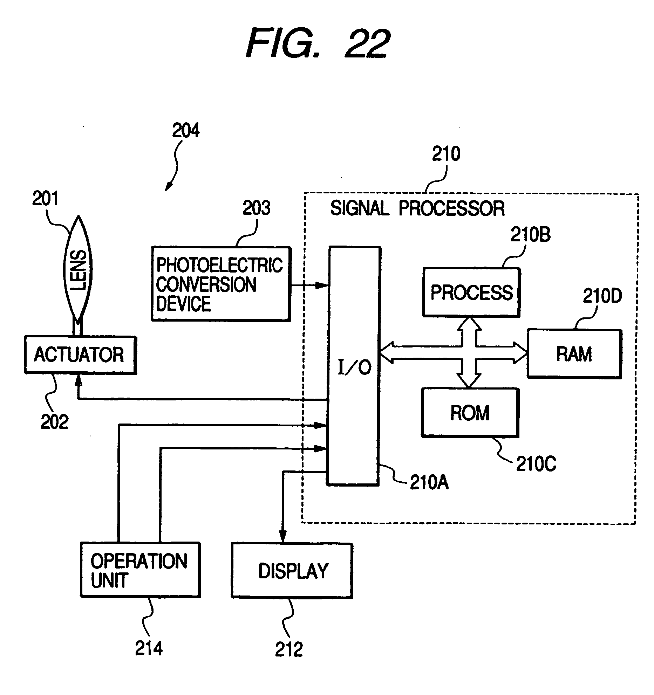

Fig. 22 shows an object monitoring apparatus according to an eighth embodiment of this invention. The apparatus of Fig. 22 includes a movable lens 201, an electrically-powered actuator 202, and a photoelectric conversion device 203 provided in a camera or an image capturing device 204. The lens 201 is located in front of the photoelectric conversion device 203. The actuator 202 operates to move the lens 201 relative to the photoelectric conversion device 203. Light passes through the lens 201 before reaching the photoelectric conversion device 203 and forming thereon an image of a scene extending in front of the camera 204. The photoelectric conversion device 203 converts the image into a corresponding video signal. The photoelectric conversion device 203 outputs the video signal. The photoelectric conversion device 203 implements periodical scanning so that the video signal represents a sequence of frames. The photoelectric conversion device 203 is of, for example, a CCD-based type.

The apparatus of Fig. 22 further includes a signal processor 210, a display 212, and an operation unit 214. The signal processor 210 includes a combination of an input/output port 210A, a processing section 210B, a ROM 210C, and a RAM 210D. The signal processor 210 operates in accordance with a program stored in the ROM 210C.

The input/output port 210A within the signal processor 210 is connected to the photoelectric conversion device 203. The input/output port 210A receives the video signal from the photoelectric conversion device 203. As will be made clear later, the device 210 processes the received video signal.

The input/output port 210A within the signal processor 210 is connected to the actuator 202. The input/output port 210A outputs a drive signal to the actuator 202. As will be made clear later, the signal processor 210 controls the actuator 202.

The input/output port 210A within the signal processor 210 is connected to the display 212. As will be made clear later, the input/output port 210A outputs a processing-resultant video signal to the display 212. The processing-resultant video signal is visualized by the display 212. The signal controller 210 can control the display 212.

The input/output port 210A within the signal processor 210 is connected to the operation unit 214. The operation unit 214 can be actuated by a user. The operation unit 214 outputs a turn-on signal or a turn-off signal to the input/output port 210A when being actuated by the user.

The actuator 202 can change the position of the lens 201 relative to the photoelectric conversion device 203 among three different positions. Thus, the actuator 202 can change the distance between the lens 201 and the photoelectric conversion device 203 among three different values. According to the distance change, the plane on which the camera 204 is focused is changed among three separate positions (first, second, and third in-focus positions) P1, P2, and P3. The first, second, and third in-focus positions P1, P2, and P3 are equal to the farthest, intermediate, and nearest positions as seen from the camera 204, respectively.

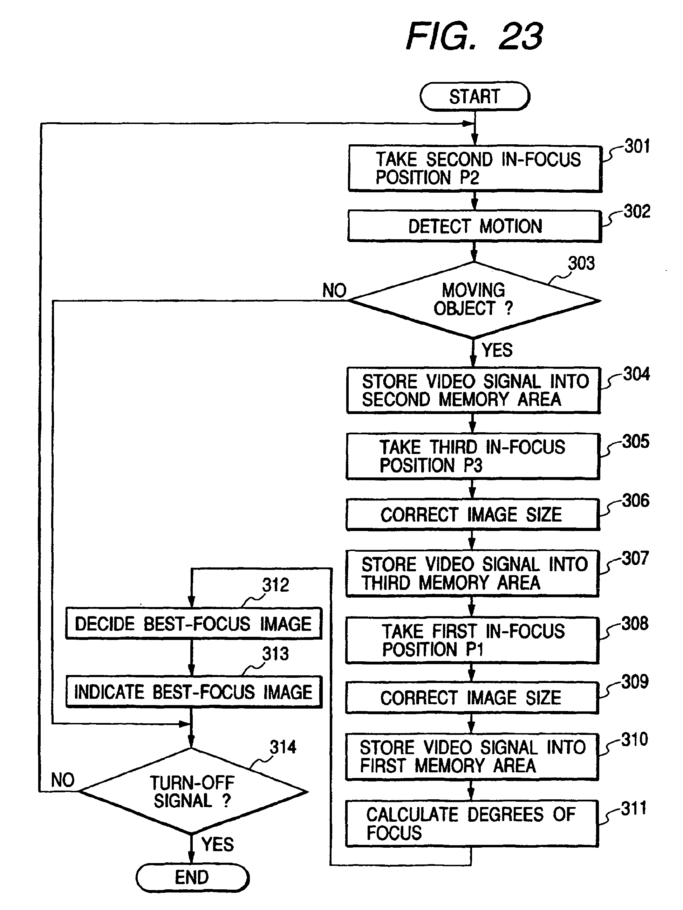

As previously mentioned, the signal processor 210 operates in accordance with a program. Fig. 23 is a flowchart of a segment of the program which is started in response to a turn-on signal fed from the operation unit 214.

As shown in Fig. 23, a first step 301 of the program segment controls the actuator 202 so that the second in-focus position P2 will be taken.

A step 302 following the step 301 processes the video signal fed from the photoelectric conversion device 203. Specifically, the step 302 subjects the video signal to a motion detection process. For example, the motion detection process is based on a comparison between two successive frames represented by the video signal.

A step 303 subsequent to the step 302 decides whether a moving object is present in or absent from an image represented by the video signal. When a moving object is absent, the program jumps from the step 303 to a step 314. Otherwise, the program advances from the step 303 to a step 304.

The step 304 stores a 1-frame-corresponding segment of the video signal into a second area within the RAM 210D.

A step 305 following the step 304 controls the actuator 202 so that the third in-focus position P3 will be taken.

A step 306 subsequent to the step 305 subjects a 1-frame-corresponding segment of the video signal to image-size correction to generate a correction-resultant video signal. The image-size correction is designed to provide an image size equal to that corresponding to the second in-focus position P2.

A step 307 following the step 306 stores a 1-frame-corresponding segment of the correction-resultant video signal into a third area within the RAM 210D.

A step 308 subsequent to the step 306 controls the actuator 202 so that the first in-focus position P1 will be taken.

A step 309 following the step 308 subjects a 1-frame-corresponding segment of the video signal to image-size correction to generate a correction-resultant video signal. The image-size correction is designed to provide an image size equal to that corresponding to the second in-focus position P2.

A step 310 subsequent to the step 309 stores a 1-frame-corresponding segment of the correction-resultant video signal into a first area within the RAM 210D.

A step 311 following the step 310 reads out the video signals from the first, second, and third areas within the RAM 210D to get images represented thereby. The step 311 calculates the degrees of focus for the moving object regarding the respective images. The calculation of the focus degrees may use a technique in the second embodiment of this invention which is based on the execution of DCT and the summations of DCT coefficients.

A step 312 subsequent to the step 311 compares the calculated focus degrees with each other, and decides which of the images corresponds to the best focus in response to the comparison results.

A step 313 following the step 312 outputs the video signal representative of the best-focus image to the display 212. The step 313 controls the display 212 to indicate the best-focus image represented by the video signal. After the step 313, the program advances to the step 314.

The step 314 decides whether or not a turn-off signal is fed from the operation unit 214. When a turn-off signal is fed from the operation unit 214, the program exits from the step 314 and then the current execution cycle of the program segment ends. Otherwise, the program returns from the step 314 to the step 301.

Ninth Embodiment

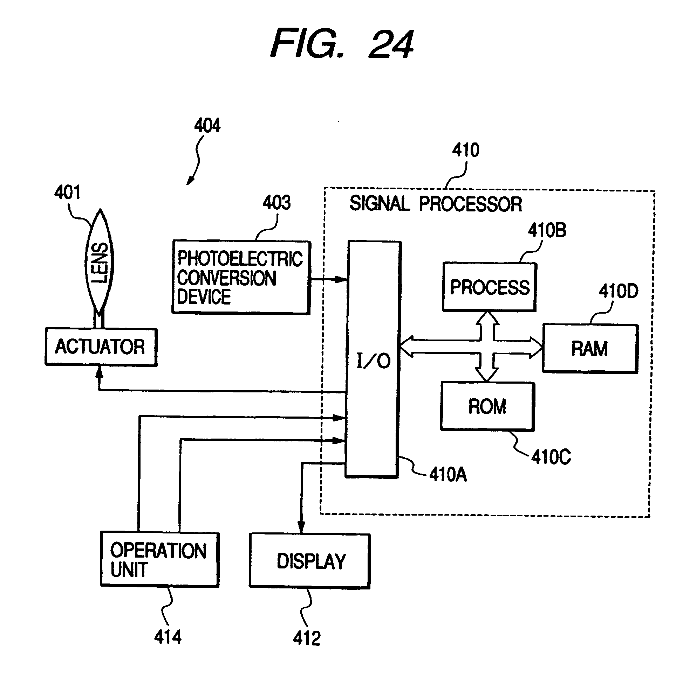

Fig. 24 shows an object monitoring apparatus according to a ninth embodiment of this invention. The apparatus of Fig. 24 includes a movable lens 401, an electrically-powered actuator 402, and a photoelectric conversion device 403 provided in a camera or an image capturing device 404. The lens 401 is located in front of the photoelectric conversion device 403. The actuator 402 operates to move the lens 401 relative to the photoelectric conversion device 403. Light passes through the lens 401 before reaching the photoelectric conversion device 403 and forming thereon an image of a scene extending in front of the camera 404. The photoelectric conversion device 403 converts the image into a corresponding video signal. The photoelectric conversion device 403 outputs the video signal. The photoelectric conversion device implements periodical scanning so that the video signal represents a sequence of frames. The photoelectric conversion device 403 is of, for example, a CCD-based type.

The apparatus of Fig. 24 further includes a signal processor 410, a display 412, and an operation unit 414. The signal processor 410 includes a combination of an input/output port 410A, a processing section 410B, a ROM 410C, and a RAM 410D. The signal processor 410 operates in accordance with a program stored in the ROM 410C.

The input/output port 410A within the signal processor 410 is connected to the photoelectric conversion device 403. The input/output port 410A receives the video signal from the photoelectric conversion device 403. As will be made clear later, the device 410 processes the received video signal.

The input/output port 410A within the signal processor 410 is connected to the actuator 402. The input/output port 410A outputs a drive signal to the actuator 402. As will be made clear later, the signal processor 410 controls the actuator 402.

The input/output port 410A within the signal processor 410 is connected to the display 412. As will be made clear later, the input/output port 410A outputs a processing-resultant video signal to the display 412. The processing-resultant video signal is visualized by the display 412. The signal processor 410 can control the display 412.

The input/output port 410A within the signal processor 410 is connected to the operation unit 414. The operation unit 414 can be actuated by a user. The operation unit 414 outputs a turn-on signal or a turn-off signal to the input/output port 410A when being actuated by the user.

The actuator 402 can change the position of the lens 401 relative to the photoelectric conversion device 403 among three different positions. Thus, the actuator 402 can change the distance between the lens 401 and the photoelectric conversion device 403 among three different values. According to the distance change, the plane on which the camera 404 is focused is changed among three separate positions (first, second, and third in-focus positions) P1, P2, and P3. The first, second, and third in-focus positions P1, P2, and P3 are equal to the farthest, intermediate, and nearest positions as seen from the camera 404, respectively.

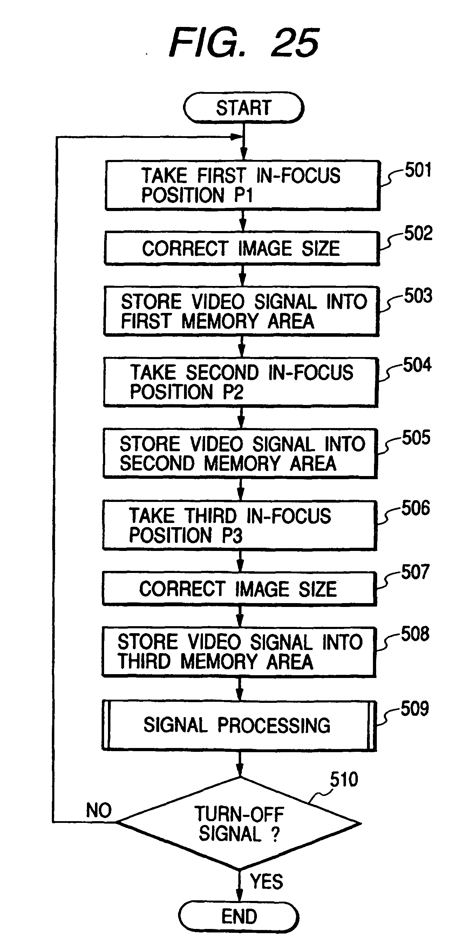

As previously mentioned, the signal processor 410 operates in accordance with a program. Fig. 25 is a flowchart of a segment of the program which is started in response to a turn-on signal fed from the operation unit 414.

As shown in Fig. 25, a first step 501 of the program segment controls the actuator 402 so that the first in-focus position P1 will be taken.

A step 502 following the step 501 subjects a 1-frame-corresponding segment of the video signal to image-size correction to generate a correction-resultant video signal. The image-size correction is designed to provide an image size equal to that corresponding to the second in-focus position P2.

A step 503 subsequent to the step 502 stores a 1-frame-corresponding segment of the correction-resultant video signal into a first area within the RAM 410D.

A step 504 following the step 503 controls the actuator 402 so that the second in-focus position P1 will be taken.

A step 505 subsequent to the step 504 stores a 1-frame-corresponding segment of the video signal into a second area within the RAM 410D.

A step 506 following the step 505 controls the actuator 402 so that the third in-focus position P1 will be taken.

A step 507 subsequent to the step 506 subjects a 1-frame-corresponding segment of the video signal to image-size correction to generate a correction-resultant video signal. The image-size correction is designed to provide an image size equal to that corresponding to the second in-focus position P2.

A step 508 following the step 507 stores a 1-frame-corresponding segment of the correction-resultant video signal into a third area within the RAM 410D.

A signal processing block 509 follows the step 508. After the block 509, the program advances to a step 510.

The step 510 decides whether or not a turn-off signal is fed from the operation unit 414. When a turn-off signal is fed from the operation unit 414, the program exits from the step 510 and then the current execution cycle of the program segment ends. Otherwise, the program returns from the step 510 to the step 501.

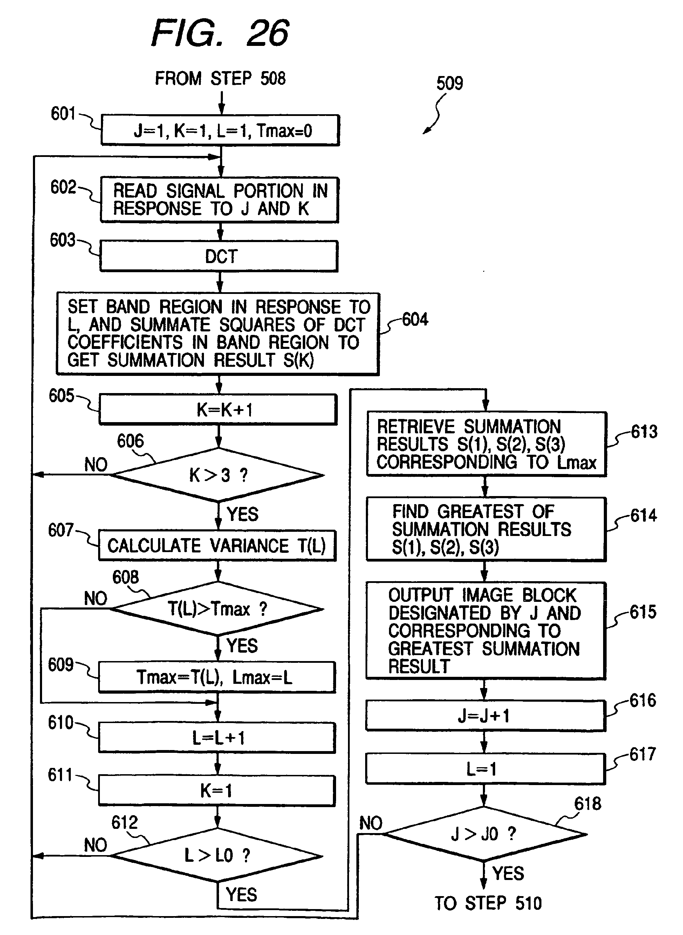

As shown in Fig. 26, the signal processing block 509 has a first step 601 which follows the step 508 (see Fig. 25). The step 601 initializes values J, K, and L to "1". In addition, the step 601 initializes a value Tmax to "0". The value Tmax denotes a maximal variance. The value J designates one from among blocks composing one frame. Specifically, different values J (1, 2, 3, ---, and J0) are assigned to blocks composing one frame, respectively. Accordingly, one of the values J designates one of the blocks. The value K designates one from among the first, second, and third areas within the RAM 410D or one from among the video signals in the first, second, and third areas within the RAM 410D. Specifically, the value K being "1" is assigned to the first area within the RAM 410D or the video signal in the first area within the RAM 410D. The value K being "2" is assigned to the second area within the RAM 410D or the video signal in the second area within the RAM 410D. The value K being "3" is assigned to the third area within the RAM 410D or the video signal in the third area within the RAM 410D. The value L designates one from among different window regions in a DCT-coefficient matrix. The window regions are different in position and size. The window regions correspond to different frequency bands, respectively. Specifically, different values L (1, 2, 3, ···, and L0) are assigned to the widow regions, respectively. Accordingly, one of the values L designates one of the window regions as a selected window. Here, LO denotes a value equal to the total number of the window regions. After the step 601, the program advances to a step 602.

The step 602 reads out a portion of the video signal from one of the first, second, and third areas within the RAM 410D which is designated by the value K. Specifically, the first area within the RAM 410D is designated when the value K is "1". The second area within the RAM 410D is designated when the value K is "2". The third area within the RAM 410D is designated when the value K is "3". The read-out video signal portion corresponds to the block designated by the value J.

A step 603 following the step 602 subjects the block-corresponding video signal portion to DCT (discrete cosine transform) according to the previously-indicated equations (58), (59A), and (59B).

A step 604 subsequent to the step 603 sets a band region (a window region) in the DCT-coefficient matrix which is designated by the value L. The step 604 summates the squares of DCT coefficients in the band region according to the previously-indicated equation (60). Thus, the step 604 gets the summation result S(K).

A step 605 following the step 604 increments the value K by "1". A step 606 subsequent to the step 605 decides whether or not the value K exceeds "3". Wen the value K exceeds "3", the program advances from the step 606 to a step 607. Otherwise, the program returns from the step 606 to the step 602.

As a result, the summation results S(1), S(2), and S(3) are generated by the step 604.

The step 607 calculates the variance T(L) of the summation results S(1), S(2), and S(3) according to the previously-indicated equation (61).

A step 608 following the step 607 compares the calculated variance T(L) with a maximal variance Tmax. It should be noted that the initial value of the maximal variance Tmax is "0". When the calculated variance T(L) is greater than the maximal variance Tmax, the program advances from the step 608 to a step 609. Otherwise, the program jumps from the step 608 to a step 610.

The step 609 updates the maximal variance Tmax. The step 609 also updates a number Lmax corresponding to the maximum variance Tmax. The number Lmax indicates the greatest-variance band region. Specifically, the step 609 equalizes the maximal variance Tmax to the calculated variance T(L). The step 609 equalizes the number Lmax to the value L. After the step 609, the program advances to the step 610.

The step 610 increments the value L by "1". A step 611 following the step 610 resets the value K to "1". A step 612 subsequent to the step 611 decides whether or not the value L exceeds a predetermined number L0. Wen the value L exceeds the predetermined number L0, the program advances from the step 612 to a step 613. Otherwise, the program returns from the step 612 to the step 602.

The step 613 gets information of the greatest-variance band region from the value Lmax. The step 613 retrieves the summation results S(1), S(2), and S(3) for the greatest-variance band region.

A step 614 following the step 613 compares the retrieved summation results S(1), S(2), and S(3), and hence finds the greatest of the summation results S(1), S(2), and S(3).

A step 615 subsequent to the step 614 reads out a portion of the vide signal from one of the first, second, and third areas within the RAM 410D which corresponds to the greatest summation result. Specifically, the step 615 reads out a portion of the video signal from the first area within the RAM 410D when the summation result S(1) is the greatest. The step 615 reads out a portion of the video signal from the second area within the RAM 410D when the summation result S(2) is the greatest. The step 615 reads out a portion of the video signal from the third area within the RAM 410D when the summation result S(3) is the greatest. The read-out portion of the video signal corresponds to the block designated by the block number J. The step 615 outputs the read-out video signal portion to the display 412, and stores it into a memory within the display 412.

A step 616 increments the value J by "1". A step 617 following the step 616 resets the value L to "1". A step 618 subsequent to the step 617 decides whether or not the value J exceeds a predetermined number J0. Wen the value J exceeds the predetermined number J0, the program advances from the step 618 to the step 510 (see Fig. 25). Otherwise, the program returns from the step 618 to the step 602.

As understood from the previous description, one of the video signal portion in the first area within the RAM 410D, the video signal portion in the second area within the RAM 410D, and the video signal portion in the third area within the RAM 410D which corresponds to the designated block and the greatest of the summation results S(1), S(2), and S(3) is selected before being transferred to the memory within the display 412.

Subsequently, the designated block is changed to next one. The previously-mentioned signal processing is iterated while the designated block is periodically changed from one to another. When all the blocks composing one frame have been scanned, the memory within the display 412 is loaded with a complete set of block-corresponding video signal portions which corresponds to one frame. The display 412 indicates an image represented by the complete set of the block-corresponding video signal portions.

In general, DCT coefficients corresponding to higher frequencies are greater as the degree of focus for an object in an image represented by the related video signal increases. Accordingly, the summation result S(1) indicates the degree of focus for an object in a partial image represented by the related block-corresponding video signal portion in the first area within the RAM 410D. Similarly, the summation result S(2) indicates the degree of focus for an object in a partial image represented by the related block-corresponding video signal portion in the second area within the RAM 410D. In addition, the summation result S(3) indicates the degree of focus for an object in a partial image represented by the related block-corresponding video signal portion in the third area within the RAM 410D. The greatest of the summation results S(1), S(2), and S(3) corresponds to the best focus. Accordingly, for each of the blocks composing one frame, the best-focus video signal portion is selected from among the block-corresponding signal portions in the first, second, and third areas within the RAM 410D, and is then transferred to the memory within the display 412. As a result, the best-focus image is indicated by the display 412. In the DCT-coefficient matrix, the band region at which the variance T peaks is suited for accurate evaluation of the degrees of focus on the basis of the summation results S(1), S(2), and S(3).

**Claims**

1. An object monitoring apparatus comprising:

   a camera (4) for generating a video signal of an image of an object having
   a movable lens (1) moved under control of a controller (7) to change an in-focus position, and
   first means (3) for converting the image, represented by light passing through the lens, into the video signal;
   a motion detector (6) for detecting a moving object in an image represented by the video signal generated by the camera; and
   an output unit (12) for outputting the video signal representing an image of the moving object detected by the motion detector;

   **characterised by**:

   said controller (7) being arranged for, when the motion detector detects a moving object, changing the in-focus position, on which the camera is focused, among predetermined positions different from each other;
   a processor (11) for detecting degrees of focus of images represented by video signals which are generated by the camera when the in-focus position coincides with the predetermined positions respectively, for deciding a greatest of the focus degrees and for controlling the output unit to output the video signal representing the image having the greatest focus degree.

2. An object monitoring apparatus according to claim 1, wherein the motion detector (6) is further adapted to decide whether a moving object is present in or absent from an image represented by the video signal generated by the camera;
   the controller (7) is further adapted, in cases where the motion detector (6) decides that a moving object is present in an image represented by the video signal, to change an in-focus position, on which the camera is focused, among the predetermined positions including at least first and second predetermined positions; and
   the processor (11) is further adapted to detect a first degree of focus of an image represented by a first video signal which is generated by the camera when the in-focus position coincides with the first predetermined position, to detect a second degree of focus of an image represented by a second video signal which is generated by the camera when the in-focus position coincides with the second predetermined position, to decide a greatest of the first and second focus degrees and to select one zoom among the first and second video signals which represents the image having the greatest focus degree.

3. An object monitoring apparatus according to claim 2, wherein the processor (11) comprises means for subjecting the first and second video signals to a Discrete Cosine Transformation (DCT) to generate first and second DCT coefficients, means for summing squares of DCT coefficients selected from among the first and second DCT coefficients to generate first and second summation results, and means for detecting the first and second focus degrees in response to the first and second summation results.

4. An object monitoring apparatus according to any one of the preceding claims, wherein the controller (7) maintains the in-focus position to a normal in-focus position when the motion detector (6) detects no moving object in the image represented by the video signal generated by the camera.

5. An object monitoring apparatus according to claim 4, wherein the normal in-focus position is one of the predetermined positions.

6. An object monitoring apparatus according to any one of the preceding claims, wherein the outputting unit (12) includes a display for displaying the video signal representing the image of the moving object.

**Patentansprüche**

1. Objektüberwachungsvorrichtung, umfassend:

eine Kamera (4) zum Erzeugen eines Videosignals eines Bilds eines Objekts mit einer bewegbaren Linse (1), die unter der Steuerung eines Controllers (7) bewegt wird, um eine fokussierte Position zu verändern, und ein erstes Mittel (3) zum Umwandeln des Bilds, das durch durch die Linse gelangendes Licht dargestellt wird, in das Videosignal;
einen Bewegungsdetektor (6) zum Detektieren eines sich bewegenden Objekts in einem Bild, das durch das durch die Kamera erzeugte Videosignal dargestellt wird; und
eine Ausgabeeinheit (12) zum Ausgeben des Videosignals, das ein Bild des durch den Bewegungsdetektor detektierten sich bewegenden Objekts dargestellt;

**gekennzeichnet** t durch:

den Controller (7), der angeordnet ist, um, wenn der Bewegungsdetektor ein sich bewegendes Objekt detektiert, die fokussierte Position, auf die die Kamera eingestellt ist, zwischen vorbestimmten Positionen, die voneinander verschieden sind, zu verändern;
einen Prozessor (11) zum Detektieren von Fokusgraden von Bildern, die durch durch die Kamera erzeugte Videosignale dargestellt werden, wenn die fokussierte Position mit den jeweils vorbestimmten Positionen zusammenfällt, um einen größten der Fokusgrade zu bestimmen und um die Ausgabeeinheit zu steuern, um das Videosignal auszugeben, das das Bild mit dem größten Fokusgrad darstellt.

2. Objektüberwachungsvorrichtung nach Anspruch 1,
wobei der Bewegungsdetektor (6) ferner geeignet ist, um zu bestimmen, ob ein sich bewegendes Objekt in einem Bild, das durch das durch die Kamera erzeugte Videosignal dargestellt wird, vorhanden ist oder nicht vorhanden ist;
der Controller (7) ferner geeignet ist, um in Fällen, in denen der Bewegungsdetektor (6) bestimmt, dass ein sich bewegendes Objekt in einem durch das Videosignal dargestellten Bild vorhanden ist, eine fokussierte Position, auf die die Kamera eingestellt ist, zwischen den vorbestimmten Positionen zu verändern, die mindestens eine erste und eine zweite vorbestimmte Position umfassen; und
der Prozessor (11) ferner geeignet ist, um einen ersten Fokusgrad eines Bilds zu detektieren, das durch ein durch die Kamera erzeugtes erstes Videosignal dargestellt wird, wenn die fokussierte Position mit der ersten vorbestimmten Position zusammenfällt, und um einen zweiten Fokusgrad eines Bilds zu detektieren, das durch ein durch die Kamera erzeugtes zweites Videosignal dargestellt wird, wenn die fokussierte Position mit der zweiten vorbestimmten Position zusammenfällt, um einen größten des ersten und zweiten Fokusgrads zu bestimmen und um aus dem ersten und zweiten Videosignal eines auszuwählen, das das Bild mit dem größten Fokusgrad darstellt.

3. Objektüberwachungsvorrichtung nach Anspruch 2,
wobei der Prozessor (11) ein Mittel zum Unterziehen des ersten und zweiten Videosignals einer diskreten Kosinustransformation (DCT), um erste und zweite DCT-Koeffizienten zu erzeugen, ein Mittel zum Summieren von Quadraten von aus den ersten und zweiten DCT-Koeffizienten ausgewählten DCT-Koeffizienten, um erste und zweite Summationsergebnisse zu erzeugen, und ein Mittel zum Detektieren des ersten und zweiten Fokusgrads in Ansprechen auf die ersten und zweiten Summationsergebnisse umfasst.

4. Objektüberwachungsvorrichtung nach einem der vorangehenden Ansprüche,
wobei der Controller (7) die fokussierte Position auf einer normalen fokussierten Position beibehält, wenn der Bewegungsdetektor (6) kein sich bewegendes Objekt in dem Bild detektiert, das durch das durch die Kamera erzeugte Videosignal dargestellt wird.

5. Objektüberwachungsvorrichtung nach Anspruch 4,
wobei die normale fokussierte Position eine der vorbestimmten Positionen ist.

6. Objektüberwachungsvorrichtung nach einem der vorangehenden Ansprüche,
wobei die Ausgabeeinheit (12) eine Anzeige zum Anzeigen des Videosignals umfasst, das das Bild des sich bewegenden Objekts darstellt.

**Revendications**

1. Appareil de contrôle d'objet comprenant :

   une caméra (4) pour générer un signal vidéo d'un image d'un objet ayant
   une lentille mobile (1) déplacée sous le contrôle d'une commande (7) pour changer une position focalisée, et
   des premiers moyens (3) pour convertir l'image, représentée par la lumière passant à travers la lentille, en le
   signal vidéo;
   un détecteur de mouvement (6) pour détecter un objet mobile dans une image représentée par le signal vidéo
   généré par la caméra ; et
   une unité de sortie (12) pour sortir le signal vidéo représentant une image de l'objet mobile détecté par le
   détecteur de mouvement;

   **caractérisé en ce que**:

   ladite commande (7) est agencée pour, quand le détecteur de mouvement détecte un objet mobile, changer la
   position focalisée, sur laquelle la caméra est focalisée, entre des positions prédéterminées différentes les unes
   des autres ;
   un processeur (11) pour détecter des degrés de focalisation d'images représentées par des signaux vidéos qui
   sont générées par la caméra quand la position focalisée coïncide avec les positions prédéterminées respectivement, pour décider un meilleur des degrés de focalisation pour commander l'unité de sortie pour sortir le
   signal vidéo représentant l'image ayant le meilleur degré de focalisation.

2. Appareil de contrôle d'objet selon la revendication 1, dans lequel le détecteur de mouvement (6) est en outre adapté
   pour décider si un objet mobile est présent ou absent d'une image représentée par le signal vidéo généré par la
   caméra ';
   la commande (7) est en outre adaptée, dans des cas où le détecteur de mouvement (6) décide qu'un objet mobile
   est présent dans une image représentée par le signal vidéo, pour changer de position focalisée, sur laquelle la
   caméra est focalisée, entre les positions prédéterminées comprenant au moins des première et seconde positions
   prédéterminées; et
   le processeur (11) est en outre adapté pour détecter un premier degré de focalisation d'une image représentée par
   un premier signal vidéo qui est généré par la caméra quand la position focalisée coïncide avec la première position
   prédéterminée, pour détecter un second degré de focalisation d'une image représentée par un second signal vidéo
   qui est généré par la caméra quand la position focalisée coïncide avec la seconde position prédéterminée, pour
   décider un meilleur des premier et second degrés de focalisation et pour sélectionner l'un parmi les premier et
   second signaux vidéo qui représentent l'image ayant le meilleur degré de focalisation.

3. Appareil de contrôle d'objet selon la revendication 2, dans lequel le processeur (11) comprend des moyens pour
   soumettre les premier et second signaux vidéo à une transformée en cosinus discrète (DCT) pour générer des
   premier et second coefficients de DCT, des moyens pour faire la somme des carrés des coefficients de DCT
   sélectionnés parmi les premier et second coefficients de DCT pour générer des premier et second résultats de
   sommation, et des moyens pour détecter les premier et second degrés de focalisation en réponse aux premier et
   second résultats de sommation.

4. Appareil de contrôle d'objet selon l'une quelconque des revendications précédentes, dans lequel la commande (7)
   maintient la position focalisée dans une position focalisée normale quand le détecteur de mouvement (6) ne détecte
   pas d'objet mobile dans l'image représentée par le signal vidéo généré par la caméra.

5. Appareil de contrôle d'objet selon la revendication 4, dans lequel la position focalisée normale est l'une des positions
   prédéterminées.

6. Appareil de contrôle d'objet selon l'une quelconque des revendications précédentes, dans lequel l'unité de sortie
   (12) comprend un affichage pour afficher le signal vidéo représentant l'image de l'objet mobile.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

## FIG. 14

## FIG. 15

## FIG. 16

## FIG. 17

# FIG. 18

# FIG. 19

# FIG. 20

# FIG. 21

# FIG. 22

# FIG. 23

```
                        ( START )
                            │
                            ▼
          ┌──────────────────────────────────┐ ─301
          │ TAKE SECOND IN-FOCUS POSITION P2  │
          └──────────────────────────────────┘
                            │
                            ▼
          ┌──────────────────────────────────┐ ─302
          │        DETECT MOTION             │
          └──────────────────────────────────┘
                            │
                            ▼
                        ╱ 303 ╲
        NO         ╱  MOVING    ╲
   ◄───────────────  OBJECT ?   
                    ╲          ╱
                        ╲    ╱
                          │ YES
                          ▼
          ┌──────────────────────────────────┐ ─304
          │ STORE VIDEO SIGNAL INTO          │
          │ SECOND MEMORY AREA               │
          └──────────────────────────────────┘
                          │
                          ▼
          ┌──────────────────────────────────┐ ─305
          │ TAKE THIRD IN-FOCUS POSITION P3   │
          └──────────────────────────────────┘
                          │
                          ▼
          ┌──────────────────────────────────┐ ─306
          │       CORRECT IMAGE SIZE         │
          └──────────────────────────────────┘
                          │
                          ▼
          ┌──────────────────────────────────┐ ─307
          │ STORE VIDEO SIGNAL INTO          │
          │ THIRD MEMORY AREA                │
          └──────────────────────────────────┘
                          │
                          ▼
          ┌──────────────────────────────────┐ ─308
          │ TAKE FIRST IN-FOCUS POSITION P1   │
          └──────────────────────────────────┘
                          │
                          ▼
          ┌──────────────────────────────────┐ ─309
          │       CORRECT IMAGE SIZE         │
          └──────────────────────────────────┘
                          │
                          ▼
          ┌──────────────────────────────────┐ ─310
          │ STORE VIDEO SIGNAL INTO          │
          │ FIRST MEMORY AREA                │
          └──────────────────────────────────┘
                          │
                          ▼
          ┌──────────────────────────────────┐ ─311
          │ CALCULATE DEGREES OF FOCUS        │
          └──────────────────────────────────┘

  ┌──────────────────────────────────┐ 312
  │   DECIDE BEST-FOCUS IMAGE        │
  └──────────────────────────────────┘
                 │ 313
                 ▼
  ┌──────────────────────────────────┐
  │   INDICATE BEST-FOCUS IMAGE      │
  └──────────────────────────────────┘
                 │
                 ▼
              ╱  314 ╲
      NO    ╱ TURN-OFF ╲
   ◄────────  SIGNAL ?  
            ╲          ╱
               ╲    ╱
                 │ YES
                 ▼
             ( END )
```

# FIG. 24

# FIG. 25

```
        ┌──────────┐
        │  START   │
        └────┬─────┘
             │
   ┌─────────▼──────────┐
   │ TAKE FIRST IN-FOCUS │──501
   │    POSITION P1      │
   └─────────┬──────────┘
             │
   ┌─────────▼──────────┐
   │ CORRECT IMAGE SIZE  │──502
   └─────────┬──────────┘
             │
   ┌─────────▼──────────┐
   │ STORE VIDEO SIGNAL INTO │──503
   │   FIRST MEMORY AREA │
   └─────────┬──────────┘
             │
   ┌─────────▼──────────┐
   │ TAKE SECOND IN-FOCUS │──504
   │    POSITION P2      │
   └─────────┬──────────┘
             │
   ┌─────────▼──────────┐
   │ STORE VIDEO SIGNAL INTO │──505
   │  SECOND MEMORY AREA │
   └─────────┬──────────┘
             │
   ┌─────────▼──────────┐
   │ TAKE THIRD IN-FOCUS │──506
   │    POSITION P3      │
   └─────────┬──────────┘
             │
   ┌─────────▼──────────┐
   │ CORRECT IMAGE SIZE  │──507
   └─────────┬──────────┘
             │
   ┌─────────▼──────────┐
   │ STORE VIDEO SIGNAL INTO │──508
   │  THIRD MEMORY AREA  │
   └─────────┬──────────┘
             │
   ┌─────────▼──────────┐
   │ SIGNAL PROCESSING   │──509
   └─────────┬──────────┘
             │
        ┌────▼─────┐
   NO   │ TURN-OFF │──510
  ◄─────│ SIGNAL ? │
        └────┬─────┘
             │ YES
        ┌────▼─────┐
        │   END    │
        └──────────┘
```

# FIG. 26

FROM STEP 508

509

601 — J=1, K=1, L=1, Tmax=0

602 — READ SIGNAL PORTION IN RESPONSE TO J AND K

603 — DCT

604 — SET BAND REGION IN RESPONSE TO L, AND SUMMATE SQUARES OF DCT COEFFICIENTS IN BAND REGION TO GET SUMMATION RESULT S(K)

605 — K=K+1

606 — K > 3 ?  NO  YES

607 — CALCULATE VARIANCE T(L)

608 — T(L)>Tmax ?  NO  YES

609 — Tmax=T(L), Lmax=L

610 — L=L+1

611 — K=1

612 — L > L0 ?  NO  YES

613 — RETRIEVE SUMMATION RESULTS S(1), S(2), S(3) CORRESPONDING TO Lmax

614 — FIND GREATEST OF SUMMATION RESULTS S(1), S(2), S(3)

615 — OUTPUT IMAGE BLOCK DESIGNATED BY J AND CORRESPONDING TO GREATEST SUMMATION RESULT

616 — J=J+1

617 — L=1

618 — J > J0 ?  NO  YES

TO STEP 510